# EUROPEAN PATENT APPLICATION

(11) **EP 0 691 561 A1**
(43) Date of publication of application: **10.01.1996**
(21) Application number: 95902997.6
(22) Date of filing: 20.12.1994
(51) Int. Cl.: G02C 5/12

(54) **PAD CHANGE TYPE SPECTACLE FRAME**

(30) Priority: 27.01.1994 JP 228/94 U
(71) Applicant: MASUNAGA OPTICAL MFG. Co., LTD., Fukui-shi, Fukui 910-37 (JP)
(72) Inventor: MASUNAGA, Satoru, Fukui-shi, Fukui 910-37 (JP)
(74) Representative: Pearce, Anthony Richmond
(86) International application number: JP9402147
(87) International publication number: WO9520775

(57) **Abstract**

A technical issue to be solved by the invention is to provide a pad change type spectacle frame, in which change of pads can be readily and rapidly performed, pads serve to adjust a distance between vertices of corneas of a person who wears spectacles and pads themselves can be stably held on a spectacle frame. As a measure for solving the issue, the invention has a feature of employing a mechanism, in which at least rod ends of flexible pad change members are detachably fitted to anchoring portions provided on inner, lower cords of fronts. With this arrangement, pads can be readily changed, repairing, cleaning and adjusting of pads and correction of a deformed spectacle frame can be facilitated, and positional adjustment of front portions of spectacles with respect to the eyes of a person who wears the spectacles can be readily performed to thereby ensure a proper distance between vertices of corneas.

## Description

### FIELD OF THE INVENTION

The present invention relates to the improvement in a spectacles frame with removable nose pad or more specifically, it relates to the spectacles frame with removable nose pad whose exchangeable member can be easily and stably fixed to the frame and is also easy to remove therefrom.

### BACKGROUND OF THE INVENTION

Conventionally, the method for exchanging a spectacles nose pad has been adopted in which a machine screw of the pad has been removed with a screw driver at first and later a new or repaired pad has been installed to the frame again with a screw driver. However, such a job as exchanging the nose pad with a screw driver takes a lot of time and labor because a screw with which the pad is fixed to the frame is very small in size and moreover the nose pad is prone to damage because it always contacts the nose and is a portion subject to the strongest stress in all the spectacles parts. Thus, it is only natural that it should require the pad to be exchanged in some cases, but it has taken a lot of trouble to do so. For that reason, the structure of the frame in which the nose pad is easy and fast to exchange has been in demand from the public since before.

Also, as the spectacles nose pad has been easy to get stained with sweat and nose grease because it always contacts the nose, it has been necessary to regularly wash it. However hard the pad may be wahsed, the dirt and grease stained on the pad and around its circumference can not be completely wahsed out. In this case, if the pad is removable for washing, it makes it possible to wash out the stain efficiently and completely. Therefore, the pad which is easy to remove is more in acute need than ever.

For the purpose of realizing the pad in such a structure as mentioned above, since it is necessary not only to make the pad easy to remove but also to make it stably fixed to the frame, there is contradictory proposition between them that should be overcome once and for all. However, since the reality is that making the pad easy to remove causes the pad to be unstably fixed to the frame, while making it completely fixed to the frame complicates the process for removing it with the result that it takes more time to attach and detach it, it has been very hard to overcome the aforesaid contradiction at the same time.

Also, because of the limit in the movable range of the pad used in a conventional pair of spectacles, it has been impossible to finely adjust the distance between the vertex of the cornea and that of the backside of the spectacles lenses. Owing to this, the spectacles frame becomes deformed while it has been used for a long time so that it has become impossible any longer to adjust the aforesaid distance even if it may be dislocated. And if the eyeglasses wearers keep on using a pair of spectacles the aforesaid distance of which is dislocated, it causes them not only dizziness, eyestrain and headache but also even gastroenteric disorder resulting from physical stress due to the continuation of those minor symptoms.

### DISCLOSURE OF THE INVENTION

Bearing the aforesaid difficulties encountered in a conventional spectacles frame in mind, the object of the present invention is to provide a spectacles frame a nose pad of which is easy and fast to exchange and also to which the pad can be stably fixed.

Another object of the present invention is to provide a spectacles frame whose nose pad is removable and on which a pad exchangeable member is provided having such flexibility as enabling fine adjustment of the distance between the vertex of the cornea and that of the backside of the spectacles lenses.

### BRIEF DESCRIPTION OF THE DRAWINGS

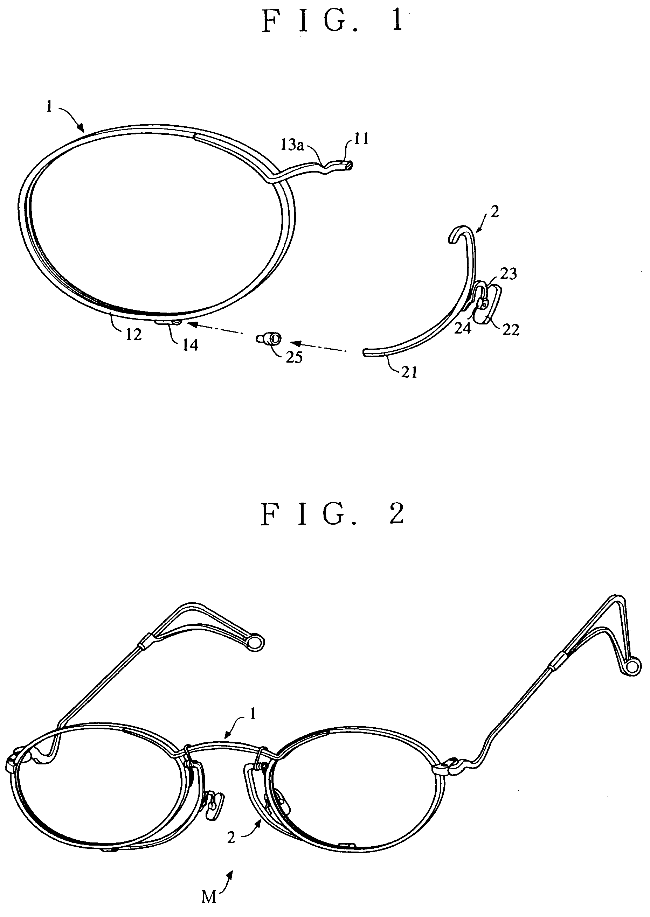

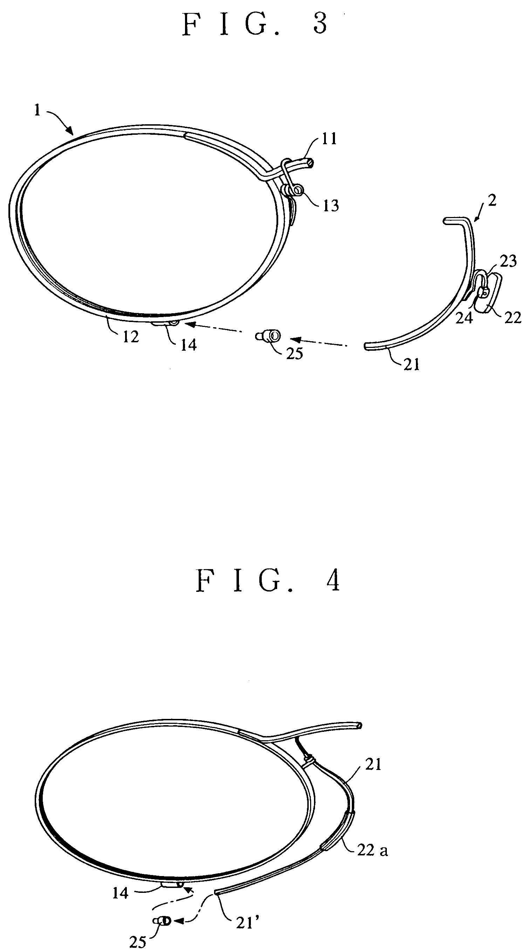

FIG. 1 is a partly enlarged and exploded view to describe a portion of a spectacles frame with removable nose pad or especially showing a pad exchangeable member in the present invention more in details; FIG. 2 is a perspective view to show a pair of spectacles making use of the frame with removable nose pad in the present invention; FIG. 3 is a partly enlarged and exploded view to show the spectacles frame with removable nose pad in different mode in the present invention; and FIG. 4 is a partly enlarged and exploded view to show the spectacles frame with removable nose pad in another mode in the present invention.

### BEST MODE FOR CARRYING OUT THE INVENTION

The technical means for the present inventor to have adopted for solving the aforesaid technical issues will be decribed as follows in reference to the accompanying drawings.

Namely, the present invention is characterized in that it has solved the aforesaid issues by taking such a technical means as removably fitting both end portions of a pad exchangeable member (2) having flexibility each into an upper locking portion (13) provided on the upper portion of a front (1) and a lower locking portion (14) provided on the inside lower chord portion of the front (1).

Hereinafter, the present invention will be described more in details on the basis of embodiment shown in the accompanying drawings.

As shown in Figure 1, the spectacles frame with removable nose pad in the present invention comprises two locking portions (13) and (14) each provided on the front (1) and the pad exchangeable member (2). The aforesaid exchangeable member (2) is constituted by providing a pad arm (23) at an appropriate position of a pad holding rod (21) having flexibility and fixing a pad (22) through a pad box (24) to the pad arm(23). It is ideal that the aforesaid pad holding rod (21) should be made of super-elastic nickel-titanium alloy. Both end portions of said holding rod (21) are each fitted into the aforesaid locking portions (13) and (14) by slightly bending the rod (21) having flexibility with fingers. Then, the strength for said rod (21) to recover its original form acts and pushes on the inside surface of said locking portions (13) and (14), and thereby said exchangeable member (2) is fixed to the frame in a stable manner. In this way, a pair of spectacles as shown in Figure 2 takes shape. Also in case of exchanging a pad, it is possible to easily remove it only by picking up a portion of the rod (21) and pulling it.

As for said two locking portions, one locking portion (13) is formed in coiled shape in the proximity of a bridge (11) on the front (1) and the other portion (14) is formed in tubelike shape on the inside lower chord portion of a rim (12) on the front (1). One end of said portion (13) is connected to the rim (12) by extending it to the inside lateral of the rim while the other end is connected to the bridge (11) by extending it to the direction of the bridge so as to hook it thereon. And a go-through hole made by coiling the portion (13) is provided in the substantially middle part thereof. Also, since the portion (14) in tubelike shape is provided on a place not seen from the frontal part of the frame, it does not look bad from the viewpoint of design.

Also, by inserting one protrusive end portion of a piece (25) adjustable in length into the locking portion (14) and inserting the lower end portion of the pad holding rod (21) into a blind hole on the other end portion of the piece (25), it becomes possible to finely adjust the distance between the vertex of the cornea and that of the backside of the lenses, and thereby a pair of spectacles said distance of which is the most appropriate to each and every wearer can be realized. Accordingly, it makes it possible to prevent the wearers from suffering from eyestrain or headache owing to the dislocation of the aforesaid distance.

Furthermore, Figure 3 shows the spectacles frame with removable nose pad in different mode in the present invention. In this mode, one locking portion (13a) is directly formed at a proper place of the bridge (11) while the other portion (14) is formed in tubelike shape on the inside lower chord portion of the rim (12) on the front (1). By hooking the upper end portion in crooked shape of the pad holding rod (21) on said portion (13a) and inserting the lower end portion of the rod (21) into said locking portion (14), the pad exchangeable member (2) can be fixed to the front (1).

Figure 4 further shows the spectacles frame with removable nose pad in another mode in the present invention. In this mode, a stringed lower end portion (21') of the pad holding rod (21) made of super-elastic nickel-titanium alloy which curves and thrusts out to the ocular side of the frame is removably inserted into the locking portion (14) provided on the inside lower chord portion of the front (1), and also a sleeve pad (22a) made of silicon rubber is removably mounted on an expanded portion in the middle part of said pad holding rod (21). Incorporating such a mode as mentioned right above into the design of the spectacles frame in the present invention, since it becomes possible to make a nose pad very inconspicuous so that the face of the wearers may become more conspicuously defined in a face-to-face situation. Then, also with the spectacles frame in this mode, by intervening the piece (25) between the locking portion (14) and the end portion (21' ) of the pad holding rod, it is also possible to adjust curvedness of said rod (21) and the position of the front (1) with regard to the eyes of the wearers.

The examples embodied in the present invention have been described so far, but it should be understood that the present invention is not limited to the aforesaid examples but can be modified in various ways within the scope of the accompanying patent claims. For instance, locking portions can be provided on any place of the front and it is also possible to use a pad holding rod in different sizes and shapes only if the pad exchangeable member is to be fixed to the frame. It is needless to say that any of those different modes also should lie within the technical scope of the present invention.

### INDUSTRIAL APPLICABILITY

As having been described with the aforesaid embodiment so far, since the use of the spectacles frame with removable nose pad in the present invention makes it easy and fast to exchange a nose pad, it becomes possible to easily repair deformation of the frame and remove stains on the nose pad.

Moreover, the spectacles frame in the present invention can meet the public demand of the improvement in both removability and fixity of the nose pad at the same time so that a highly practical pair of spectacles can be realized.

And also, if necessary, since it is possible to finely adjust the distance between the vertex of the cornea and that of the backside of the lenses with the pad exchangeable member (or a pad holding rod) making use of a piece adjustable in length, it can effectively prevent dizziness, eyestrain, headache and so forth. Further in case of adopting the sleeve pad (22a) made of synthetic resin, as the nose pad becomes inconspicuous, it will be favourably received by those who are fashion-conscious.

## Claims

1. Spectacles frame with removable nose pad, wherein both end portions of a pad exchangeable member (2) having flexibility are removably each fitted into an upper locking portion (13) provided on the upper portion of a front (1) and a lower locking portion (14) provided on the inside lower chord portion of the front (1).

2. Spectacles frame according to claim 1, wherein the pad exchangeable member (2) contains a pad holding rod (21) which bows and protrudes to an ocular side of the frame.

3. Spectacles frame according to claim 1 or claim 2, wherein the pad holding rod (21) making a part of the pad exchangeable member (2) is formed of elastic metallic material.

4. Spectacles frame with removable nose pad, wherein both end portions of a pad exchangeable member (2) having flexibility are removably each fitted into an upper locking portion (13) provided on the upper portion of a front (1) and a lower locking portion (14) provided on the inside lower chord portion of the front (1), characterized in that the locking portion (13) in the proximity of a bridge (11) on the front (1) has a go-through hole formed into a coil shape and the upper end portion of the pad holding rod (21) curved into a substantially L shape is inserted into the go-through hole, and the other locking portion (14) has a blind hole formed into a tube shape and the lower end portion of the pad holding rod (21) is inserted into the blind hole.

5. Spectacles frame with removable nose pad, wherein both end portions of a pad exchangeable member (2) having flexibility are removably each fitted into an upper locking portion (13) provided on the upper portion of a front (1) and a lower locking portion (14) provided on the inside lower chord portion of the front (1), characterized in that one protrusive end portion of a piece (25) adjustable in length is inserted into the lower locking portion (14) and the lower end portion of a pad holding rod (21) is inserted into a blind hole at the other end portion of the piece (25).

6. Spectacles frame with removable nose pad, wherein at least a stringed lower end portion (21' ) of a pad holding rod (21) having flexibility which bows and protrudes to an ocular side of the frame is removably inserted into a lower locking portion (14) provided on the inside lower chord portion of a front (1) and a sleeve pad (22a) made of synthetic resin is removably mounted on said holding rod (21).

7. Spectacles frame with removable nose pad, wherein at least a stringed lower end portion (21' ) of a pad holding rod (21) having flexibility which bows and protrudes to an ocular side of the frame is removably inserted into a lower locking portion (14) provided on the inside lower chord portion of a front (1) through a piece (25) adjustable in length and a sleeve pad (22a) made of silicon rubber is removably mounted on said holding rod (21).
